# EUROPÄISCHE PATENTSCHRIFT

(11) **EP 1 501 054 B1**
(45) Veröffentlichungstag und Bekanntmachung des Hinweises auf die Patenterteilung: **26.11.2008**
(21) Anmeldenummer: 04022688.8
(22) Anmeldetag: 27.07.1999
(51) Int. Cl.: G07D 7/00

(54) **Verfahren zur Prüfung der Echtheit von Urkunden**
Method for checking the authenticity of documents recorded thereon
Procedé de vérification de l'authenticité des actes imprimés sur ce papier

(30) Priorität: 27.07.1998 DE 19833746; 28.10.1998 DE 19849762
(43) Veröffentlichungstag der Anmeldung: 26.01.2005
(62) Teilanmeldung aus: 99941470.9
(73) Patentinhaber: Infineon Technologies AG, 81669 München (DE); Brosow, Joergen, San Marcos, CA 92069 (US)
(72) Erfinder: Brosow, Joergen, San Marcos CA 92069 (US)
(74) Vertreter: Leinweber & Zimmermann

(56) Entgegenhaltungen:
- EP-A- 0 680 012
- EP-A1- 0 019 191
- DE-A1- 19 630 648
- US-A- 4 472 627
- US-A- 5 528 222

## Beschreibung

Die Erfindung bezieht sich auf ein Verfahren zur Prüfung der Echtheit von Urkunden, die in optisch lesbarer Form auf einem Sicherheitspapier mit einer eine berührungsfreie Prüfung eines Echtheitsmerkmals ermöglichenden Struktur aufgezeichnet sind.

Die Verwendung derartiger Sicherheitspapiere zur Erstellung von Urkunden dient deren Schutz vor unerlaubter Nachahmung durch Fälscher. Dies ist insbesondere bei Wertpapieren wie Banknoten, Schecks, Reiseschecks, Aktien und dgl. erforderlich. Auch für nicht unmittelbar Geld werte Papiere, wie Ausweise, Reisepässe und dgl., besteht ein Bedürfnis zur Sicherung gegen unerlaubte Nachahmung. Der verwendete Begriff "Urkunde" soll daher alle Arten von gegen unerlaubte Nachahmung zu schützenden Wertpapieren und Ausweispapieren einschließen.

Insbesondere bei im täglichen Umlauf befindlichen Wertpapieren, beispielsweise Geldscheinen, mag es einem Fälscher gelingen, den optisch aufgezeichneten Urkundeninhalt, beispielsweise das optische Druckbild der Geldscheine, täuschend genau nachzuahmen. Hiergegen schützt das dem zur Urkundenherstellung verwendeten Sicherheitspapier wegen der dem Sicherheitspapier bei der Herstellung erteilten Struktur innewohnende Echtheitsmerkmal, das mit den einem Fälscher zur Verfügung stehenden Mitteln praktisch nicht nachahmbar sein soll.

Bei einem aus einem bekannten Sicherheitspapier (DE 196 30 648 A1) hergestellten Geldschein ist die Struktur ein Transponderchip mit einer Antenne. Weiter offenbart DE 196 30 648 A1 ein Verfahren nach dem Oberbegriff von Anspruch 1.

Der Erfindung liegt die Aufgabe zugrunde, ein hinsichtlich Sicherheitsaspekten verbessertes Verfahren zur automatischen Prüfung der Echtheit derartiger Urkunden anzugeben.

Erfindungsgemäß wird diese Aufgabe durch die kennzeichnenden Merkmale des Anspruchs 1 gelöst.

Bei der erfindungsgemäßen Ausgestaltung erfolgt also einerseits die Prüfung auf das Vorliegen des Echtheitsmerkmals dadurch, daß an den sich in der Papierebene erstreckenden Schaltkreis das die Aussendung seines Ausgangssignals triggernde Eingangssignal übertragen wird. Vorzugsweise handelt es sich sowohl bei dem Eingangssignal als auch bei dem Ausgangssignal um eine mit der betreffenden Signalinformation modulierte Trägerfrequenzschwingung. Durch entsprechende Auslegung des Schaltkreises kann in dem Ausgangssignal jeder beliebige Informationsinhalt, vorzugsweise in binärer Form, als Echtheitsmerkmal kodiert werden. Es ist etwa möglich, daß der elektronischen Schaltkreis mit einem Mikrokontroller versehen ist. Damit läßt sich jeder auf dem Sicherheitspapier erstellten Urkunde mindestens ein individuelles Echtheitsmerkmal, beispielsweise die individuelle Seriennummer des Mikrocontrollers, zuordnen. Dieses kann beispielsweise bei einer Banknote darin bestehen, daß das Echtheitsmerkmal den auf dem optisch lesbaren Druckbild der Banknote angegebenen Geldwert und/oder die angegebene Seriennummer der Banknote in kodierter Form wiedergibt. Bei dem gemäß Patentanspruch 1 gestalteten Verfahren zur Echtheitsprüfung werden sowohl der optisch lesbare Inhalt der Urkunde, im Beispielsfall der Banknote deren Geldwert und/oder deren Seriennummer, und das diese Inhalte kodierende Ausgangssignal des Schaltkreises automatisch erfaßt und miteinander verglichen. Die Echtheit der Urkunde, beispielsweise der Banknote, wird von dem Verfahren nur dann bestätigt, wenn zwischen dem optisch abgelesenen Inhalt und dem Informationsinhalt des Ausgangssignals des Schaltkreises eine vorbestimmte Beziehung, beispielsweise inhaltliche Übereinstimmung, besteht.

Bei einer vorteilhaften Ausführungsform dient das Eingangssignal nicht allein dazu, auf das fest eingestellte Echtheitsmerkmal zuzugreifen, welches einer auf dem Sicherheitspapier ausgefertigten Urkunde bleibend zugeordnet ist. Vielmehr kann mit dem Eingangssignal ein,Informationsinhalt auf den Schaltkreis übertragen und dort gespeichert werden, der ansprechend auf ein nachfolgend empfangenes Empfangssignal ebenfalls mit dem ausgesendeten Ausgangssignal übertragbar ist. Diese Ausführungsform ist insbesondere im Hinblick auf die in den Patentansprüchen 2 und 3 angegebenen Verfahrensvarianten von Bedeutung. Dabei wird von jeder Stelle, welche die auf dem Sicherheitspapier erstellte. Urkunde prüft, beispielsweise von jeder Bank, zu der ein Geldschein auf seinem Geldumlaufweg gelangt, beim Prüfvorgang, beispielsweise beim Geldzählvorgang, ein die prüfende Stelle und ggf. auch das Datum der Prüfung darstellender Informationsinhalt mit dem Eingangssignal in den Schaltkreis eingeschrieben. Bei nachfolgenden Prüfungen ist dieser Informationsinhalt mit dem ausgesendeten Ausgangssignal übertragbar und liefert auf diese Weise einen örtlichen und zeitlichen Nachweis von Stationen, die durchlaufen worden sind. Unerlaubte Geldwäschegeschäfte lassen sich damit genau nachverfolgen.

In nicht unmittelbar auf das erfindungsgemäße Verfahren bezogener schaltungstechnischer Hinsicht könnte dazu ein im Schaltkreis vorgesehenen Schreib/Lesespeicher durch ein Schieberegister gebildet sein, in das eine binäre Darstellung des mit dem Eingangssignal übertragenen Informationsinhaltes sequentiell einspeicherbar ist. Hierbei bestimmt die Länge des Schieberegisters in Abhängigkeit vom Umfang der von den einzelnen Prüfstellen übertragenen Informationsinhalte die Anzahl der insgesamt abspeicherbaren Prüfungen. Da die Informationsinhalte vom Eingang des Schieberegisters zu dessen Ausgang durchgeschoben werden, enthält letzteres stets den aktuellsten Stand dieser Informationsinhalte, während Informationsinhalte länger zurückliegender Prüfungen, die die Speicherkapazität des Schieberegisters überschreiten, aus dem Schieberegister hinausgeschoben werden.

Ein anderer wichtiger Gedanke der Erfindung besteht darin, daß die den Schaltkreis bildende Struktur eine durch berührungslose Energieübertragung speisbare Energieversorgung aufweist. In dieser Hinsicht ist es besonders zweckmäßig, daß die Energieübertragung durch eine zur Modulation mit dem Eingangssignal vorgesehene Trägerfrequenzschwingung erfolgt. Hierdurch kann die Energieversorgung des Schaltkreises durch das in dem Patentanspruch 4 angegebene Verfahren vollständig von außen erfolgen, und der Schaltkreis benötigt keine eigene Betriebsenergiequelle, die wegen ihrer nur endlichen Lebensdauer und der Tatsache, daß sie jedenfalls mit heutigen Mitteln kaum papierdünn ausgebildet werden könnte, einer praktischen und wirtschaftlichen Verwirklichung des Sicherheitspapiers große Schwierigkeiten bereiten würde.

In der folgenden Beschreibung ist die Erfindung unter Bezugnahme auf die Zeichnung beispielhaft erläutert. Dabei werden auch zum Verständnis der Erfindung beitragende Merkmale einer Urkunde bzw. eines Sicherheitspapiers mit einem Schaltkreis beschrieben. Es zeigen:
- Fig. 1: eine Aufsicht auf die Vorderseite eines Reiseschecks, an dem die Verwirklichung eines zur Echtheitsprüfung dienenden elektronischen Schaltkreises schematisch angedeutet ist,
- Fig. 2: eine Aufsicht auf die Rückseite des in Fig. 1 dargestellten Reiseschecks,
- Fig. 3: eine Fig. 1 entsprechende Ansicht einer anderen Ausführungsform,
- Fig. 4: eine Aufsicht auf die Rückseite der Ausführungsform von Fig. 3,
- Fig. 5: eine schematische Darstellung einer Prüfvorrichtung, und
- Fig. 6: eine Fig. 1 entsprechende Aufsicht einer abgewandelten Ausführungsform.

Der in der Zeichnung abgebildete Reisescheck einer international bekannten Bank ist zum Zwecke der Erläuterung der Erfindung durch die schematische Darstellung eines elektronischen Schaltkreises ergänzt. Letzterer weist einen durch Dotierung leitfähigen Polymerstreifen 1 auf, der in die Papierschicht eingebettet ist. Dies kann in bekannter Weise dadurch geschehen, daß bei der Papierherstellung zunächst eine erste Teilschicht des Papierbreis geschöpft, darauf der Polymerstreifen 1 aufgelegt und anschließend darauf eine zweite Teilschicht des Papierbreis aufgebracht wird. Der Polymerstreifen 1 erstreckt sich parallel zu den beiden kürzeren Seitenrändern 2, 2' über die gesamte Breite des rechteckigen Reiseschecks hinweg bis zu dessen längeren Seitenrändern 3, 3'. Wenngleich der Polymerstreifen 1 beidseits von der Papierschicht bedeckt ist, scheint er in der Zeichnung erkennbar durch die ihn bedeckenden Schichten hindurch.

In der Mitte des Polymerstreifens 1 ist ein integrierter Polymerschaltkreischip ausgebildet, dessen Externanschlüsse von den beiden sich beidseits des Polymerschaltkreischips 4 aus erstreckenden Teilstreifen 5, 5' des Polymerstreifens 1 gebildet sind. Die beiden Teilstreifen 5, 5' sind an ihren auf den längeren Seitenrändern 3, 3' gelegenen Enden 6, 6' kapazitiv oder auch galvanisch mit einem Antennenmuster 7 gekoppelt, das sich ausgehend von den Enden 6, 6' in Form einer Leiterbahn längs den beiden längeren Seitenrändern 3, 3' und dem diese beiden Seitenränder verbindenden kürzeren Seitenrand 2 erstreckt.

Das Antennenmuster 7 könnte ebenfalls während der Papierherstellung in die Papierschicht eingebettet werden, indem es beispielsweise durch Drucken auf der zuerst geschöpften Teilschicht des Papierbreis erzeugt wird. Einfacher und ohne Sicherheitsverlust wird jedoch das Antennenmuster 7 außen auf die mit dem eingebetteten Polymerstreifen 1 versehene Papierschicht aufgedruckt. In diesem Fall überlappen die über dem Polymerstreifen 1 liegenden Enden des Antennenmusters 7 die an den längeren Seitenrändern 3, 3' innerhalb der Papierschicht gelegenen Enden 6, 6' der beiden Teilstreifen 5, 5', wobei zwischen den einander überlappenden Bereichen des Antennenmusters 7 und des Polymerstreifens 1 jeweils eine Teilschicht der Papierschicht eingeschlossen ist. Diese Teilschicht wirkt somit als Dielektrikum, durch das das Antennenmuster 7 kapazitiv an den mit dem Polymerschaltkreischip 4 versehenen Polymerstreifen 1 angekoppelt ist.

Der Polymerschaltkreischip 4 bildet einen Mikrocontroller mit einem Festwertspeicher, einem als Schreib/Lesespeicher dienenden Schieberegister und einer Eingangs/Ausgangseinheit, die einen Empfangsteil und einen Sendeteil aufweist. In dem Festwertspeicher sind die auf der Vorderseite des Reiseschecks in optisch lesbarem Klartext aufgedruckte Nummer sowie die Geldwertangabe des Reiseschecks fest abgespeichert.

Zur Prüfung der Echtheit wird der Reisescheck durch ein Prüfgerät hindurchgeführt, das einerseits die aufgedruckten, optisch lesbaren Angaben wie Schecknummer und Geldwertangabe liest. Gleichzeitig sendet dieses Lesegerät ein trägerfrequentes, moduliertes Eingangssignal für den Schaltkreis 1, 4, 7 aus. Dieses Eingangssignal wird in dem Empfangsteil des Schaltkreises dekodiert. Darauf ansprechend steuert der Mikrocontroller den Festwertspeicher und den Sendeteil zur trägerfrequenzmodulierten Aussendung eines Ausgangssignals an, in dem der Informationsinhalt des Festwertspeichers kodiert ist. Das Prüfgerät erfaßt dieses Ausgangssignal und vergleicht den damit übertragenen Informationsinhalt mit den optisch erfaßten Klartextangaben des Reiseschecks. Sofern keine Übereinstimmung besteht, wird der Reisescheck als gefälscht ausgewiesen.

Eine noch höhere Sicherheit wird erreicht, wenn die Urkunde, beispielsweise der Geldschein oder Reisescheck, zusätzlich mit einem zwar nicht optisch, aber durch sonstige technische Mittel, beispielsweise UV-Licht oder magnetisch, erfaßbaren Echtheitsmerkmal an einer von der Lage des Schaltkreises verschiedenen Stelle ausgestattet wird. In diesem Fall erfaßt das Prüfgerät dieses Echtheitsmerkmal und überträgt eine dem erfaßten Echtheitsmerkmal entsprechende Information in den Schaltkreis. Dort wird es intern, beispielsweise durch Vergleich mit einer in dem Schaltkreis abgespeicherten Referenzinformation, überprüft. Der Schaltkreis gibt nur im Falle eines positiven Überprüfungsergebnisses ein die Echtheit anzeigendes Ausgangssignal an das Prüfgerät aus.

Mit dem Eingangssignal überträgt die prüfende Stelle einen sie identifizierenden Informationsinhalt, beispielsweise Name und Ort einer den Reisescheck entgegennehmenden Bank nebst Datum der Prüfung. Gleichzeitig kann die entgegennehmende Bank eine den Einlöser des Reiseschecks, beispielsweise dessen Namen und Anschrift, identifizierende Information zusätzlich mit dem Eingangssignal übertragen und einspeichern. Diese den Einlöser identifizierende Information ist vor allem dann von Interesse, wenn eine Stelle, die den Reisescheck ursprünglich vom Aussteller entgegengenommen hat, diesen Reisescheck an eine dritte Person als Zahlungsmittel weitergibt und diese dritte Person als Einlöser bei der Bank auftritt. Diese Identifikationsinformation wird von dem Mikrokontroller in binärer Form seriell in das Schieberegister eingegeben, wobei ggf. ein Teil früher eingegebener Information am Ausgang des Schieberegisters überfließt und verlorengeht.

Das von dem Prüfgerät an den Schaltkreis übertragene Eingangssignal kann auch mit einem Befehl zum Auslesen des Inhalts des Schieberegisters unter gleichzeitigem Rückschreiben des ausgelesenen Informationsinhalts kodiert werden. Durch die Übertragung des Gesamtinhalts des Schieberegisters in dem Ausgangssignal des Schaltkreises kann das Prüfgerät diesen Informationsinhalt erfassen und auswerten. Auf diese Weise kann durch das Prüfgerät festgestellt werden, welche Prüfstellen eine zu prüfende Urkunde zu welchem Zeitpunkt früher schon durchlaufen hat. Dies ist insbesondere von Bedeutung, wenn es sich bei den Urkunden um mit dem Schaltkreis 1, 4, 7 ausgestattete Banknoten handelt, die im Zuge ihres Umlaufes immer wieder bei entgegennehmenden Banken gezählt werden. Damit läßt sich der Umlaufweg dieser Banknoten überwachen.

Im Falle von Reiseschecks läßt sich deren Sicherheit noch weiter steigern, indem die bezogene Bank bei der Ausgabe des Reiseschecks in den Schreib/Lesespeicher einen mit dem Scheckinhaber vereinbarten zusätzlichen Identifikationskode, beispielsweise einen PIN-Kode, einspeichert. Sofern eine den Reisescheck entgegennehmende Stelle mit einem zum Auslesen dieses zusätzlichen Identifikationskodes geeigneten Gerät ausgestattet ist, kann sie zur Echtheitsprüfung den Aussteller des Schecks dazu auffordern, diesen zusätzlichen Identifikationskode zu benennen, und ihn mit der ausgelesenen Version des zusätzlichen Identifikationskodes vergleichen. Falls keine Übereinstimmung besteht, ist der Reisescheck als unecht zu verwerfen.

Eine auf dem Polymerschaltkreischip 4 integrierte Energieversorgung, welche die Betriebsenergie für den an dem Reisescheck ausgebildeten Schaltkreis 1, 4, 7 liefert, wird aus der Trägerfrequenzschwingung des von dem Prüfgerät übertragenen Eingangssignals gespeist. Auf diese Weise überträgt das Prüfgerät auch die für den Betrieb des Schaltkreises erforderliche Energie.

Es versteht sich, daß das zur Herstellung der vorstehend beschriebenen Reiseschecks verwendete Sicherheitspapier in Bahnen hergestellt wird, in die formatgerecht der Polymerstreifen 1 kontinuierlich zusammenhängend eingebettet wird und die mit dem zugehörigen Antennenmuster versehen werden. Diese Papierbahn wird anschließend beidseits gedruckt und danach formatgerecht geschnitten, wodurch die einzelnen Stücke von Reiseschecks oder dgl. entstehen.

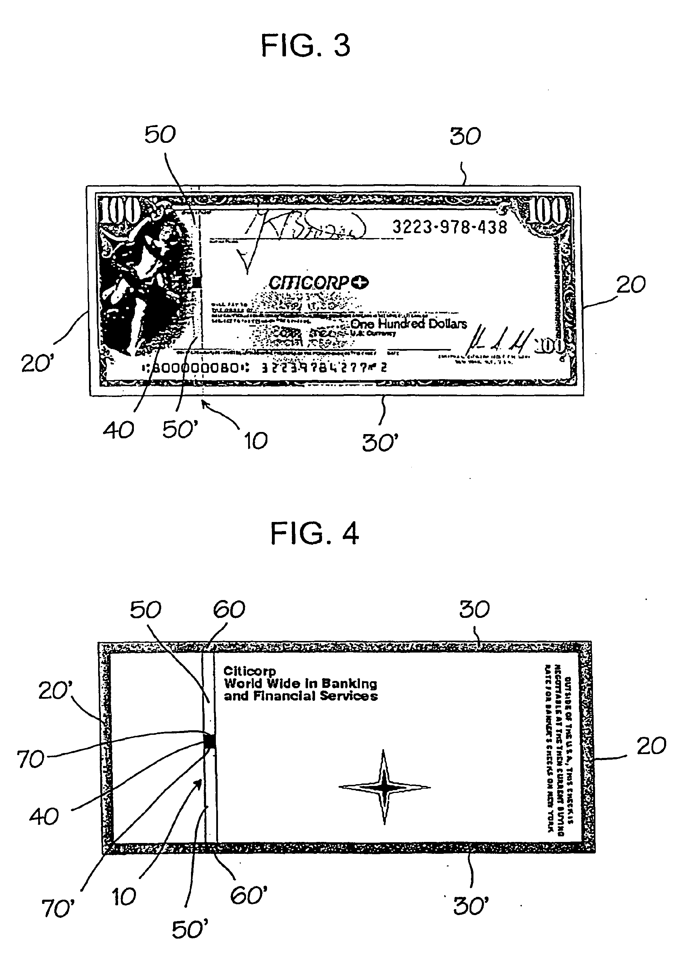

Auch bei der in Fig. 3 und 4 abgebildeten Reisescheck weist dieser einen auf einem dünnen Chip 40 ausgebildeten elektronischen Schaltkreis auf. Der Chip 40 ist auf einem Polymerstreifen 10 angeordnet, der in die Papierschicht eingebettet ist. Dies kann in bekannter Weise dadurch geschehen, daß bei der Papierherstellung zunächst eine erste Teilschicht des Papierbreis geschöpft, darauf der Polymerstreifen 10 aufgelegt und anschließend darauf eine zweite Teilschicht des Papierbreis aufgebracht wird. Der Polymerstreifen 10 erstreckt sich parallel zu den beiden kürzeren Seitenrändern 20, 20' über die gesamte Breite des rechteckigen Reiseschecks hinweg bis zu dessen längeren Seitenrändern 30, 30'. Wenngleich der Polymerstreifen 10 beidseits von der Papierschicht bedeckt ist, scheint er in der Zeichnung erkennbar durch die ihn bedeckenden Schichten hindurch.

Der Polymerstreifen 10 ist beispielsweise durch Dotierung oder eine aufgebrachte Metallisierung leitfähig gemacht. Lediglich in der Mitte zwischen den beiden Seitenrändern 30, 30', wo der integrierte Schaltkreischip 40 angeordnet ist, ist die leitfähige Dotierung oder Metallisierungsschicht derart unterbrochen, daß an einander entgegengesetzten Rändern 70, 70' des Chips 40 ausgebildete Anschlußbereiche des Chips 40 jeweils von einem der beiden sich beidseits der Unterbrechung erstreckenden Teilstreifen 50, 50' des Polymerstreifens 10 kontaktiert sind. Die beiden Teilstreifen 50, 50' bilden auf diese Weise eine an den Chip 40 angeschlossene Dipolantenne, die sowohl der Signalübertragung als auch der Übertragung der Betriebsenergie für den Chip 40 dient.

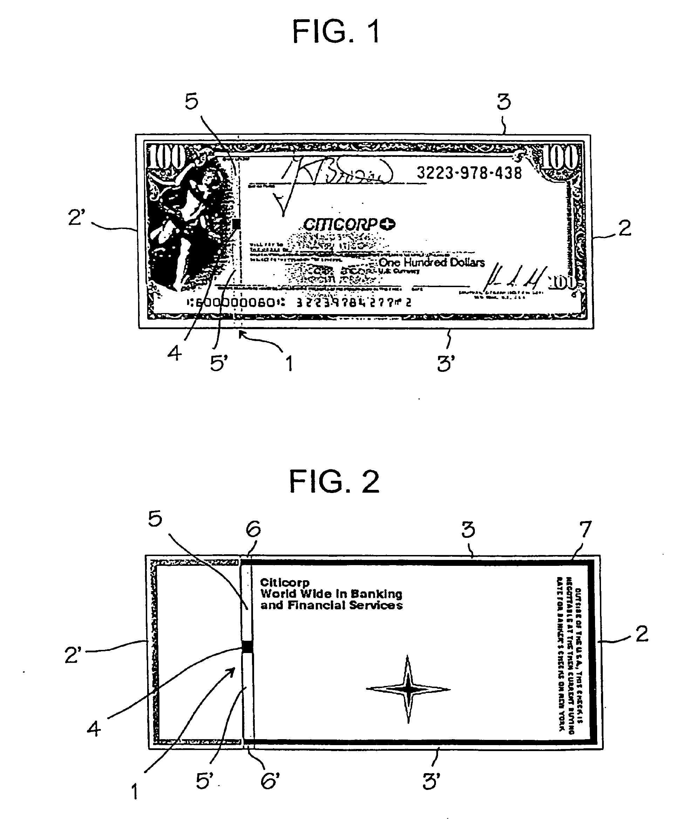

Ebenso wie der Polymerschaltkreischip 4 aus Fig. 1 und 2 bildet auch der Schaltkreischip 40 aus Fig. 3 und 4 einen Mikrocontroller mit einem Festwertspeicher, einem als Schreib/Lesespeicher dienenden Schieberegister und einer Eingangs/Ausgangseinheit, die einen Empfangsteil und einen Sendeteil aufweist. In dem Festwertspeicher sind die auf der Vorderseite des Reiseschecks in optisch lesbarem Klartext aufgedruckte Nummer sowie die Geldwertangabe des Reiseschecks fest abgespeichert. Die Prüfung der Echtheit erfolgt ebenso wie vorstehend für Fig. 1 und 2 erläutert.

Banknoten haben dieselbe Erscheinungsform wie die vorstehend anhand von Fig. 1 und 2 erläuterten Reiseschecks. Das Zählen derartiger Banknoten erfolgt gewöhnlich dadurch, daß von einem Stapel zu zählender Banknoten die jeweils oberste Banknote um eine ihrer längeren Seitenkanten 30 bzw. 30' gewendet und auf diese Weise auf einen gezählten Stapel überführt wird. Während dieses Wendevorgangs durchlaufen dann die die Dipolantenne bildenden Leiterstreifen 50, 50' eine zu den längeren Seitenkanten 30, 30' senkrechte Ebene, so daß die Leiterstreifen 50, 50' in der Mitte dieser Wendebewegung senkrecht auf der Ebene der Banknoten stehen, die auf dem zu zählenden bzw. gezählten Stapel liegen. Unter Ausnutzung der Richtcharakteristik der Dipolantenne kann das Prüfgerät derart eingerichtet werden, daß die maximale Ankopplung an die Dipolantenne 50, 50' in der Mitte des Wendeweges jeder Banknote zwischen dem zu zählenden Stapel und dem gezählten Stapel erreicht wird. Damit läßt sich ein Nebensprechen der auf den beiden Stapeln liegenden Banknoten beim Zählvorgang unterdrücken.

Wie bei der Beschreibung von Fig. 1 und 2 wird eine auf dem Schaltkreischip 40 integrierte Energieversorgung, welche die Betriebsenergie liefert, aus der Trägerfrequenzschwingung des von dem Prüfgerät übertragenen Eingangssignals gespeist. Alternativ oder auch zusätzlich könnte Betriebsenergie von einem auf der Urkunde angeordneten photo-voltaischen Bereich gewonnen werden. Auf diese Weise überträgt das Prüfgerät auch die für den Betrieb des Schaltkreischips 40 erforderliche Energie.

Das Sicherheitspapier wird in Bahnen hergestellt, in die entsprechend dem Format der aus dem Sicherheitspapier herzustellenden Geldscheine, Reiseschecks, Urkunden und dgl. der Polymerstreifen 10 mit dem daran unter einem dem Abstand der Seitenränder 30, 30' entsprechenden Abstand angeordneten Chips 40 kontinuierlich zusammenhängend eingebettet wird. Diese Papierbahn wird anschließend beidseits gedruckt und danach formatgerecht geschnitten, wodurch die einzelnen Stücke von Banknoten, Reiseschecks oder dgl. entstehen, in denen sich die als Dipolantenne dienenden Teilstreifen mit ihren Enden 60, 60' bis zu den Seitenrändern 30, 30' der geschnittenen Stücke erstrecken.

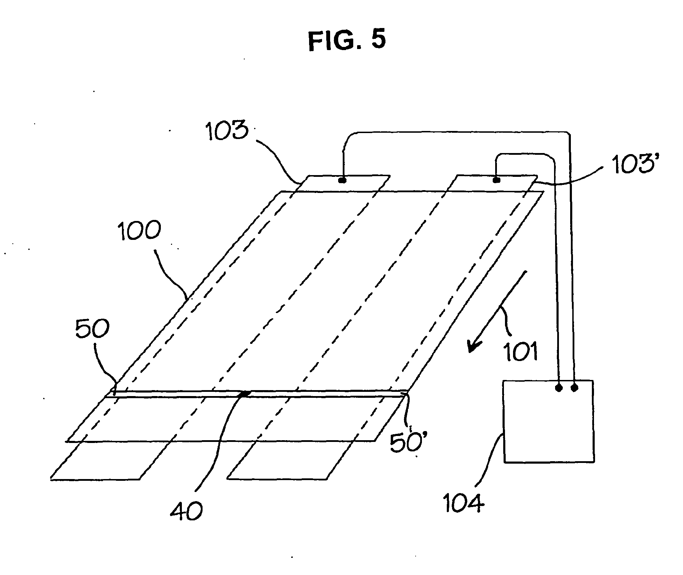

Fig. 5, in der wesentliche Teile einer Prüfvorrichtung schematisch dargestellt sind, läßt eine zu prüfende Urkunde 100, beispielsweise eine Banknote, erkennen, die von einer nicht dargestellten Transportvorrichtung in einer durch einen Pfeil 101 veranschaulichten Transportrichtung längs eines Bewegungsweges transportiert wird. Die Urkunde 100 entspricht der in den Fig. 3 und 4 dargestellten Ausführungsform. Die Ausrichtung der Urkunde 100 ist derart, daß sich die beiden an den Schaltkreischip 40 angeschlossenen Leiterstreifen 50, 50', welche die offene Dipolantenne bilden, quer zur Transportrichtung 101 erstrecken.

Die Prüfvorrichtung weist zwei langgestreckte Leiterbahnen 103, 103' auf, die sich mit ihrer Längsrichtung längs der Transportrichtung 101 erstrecken und derart angeordnet sind, daß die eine Leiterbahn 103 im Bereich des Bewegungsweges des einen Dipolzweigs 50 und die andere Leiterbahn 103' im Bereich des Bewegungswegs des anderen Dipolzweigs 50' angeordnet ist. Auf diese Weise ist die Urkunde 100 während ihrer Bewegung durch die Prüfvorrichtung mit gleichbleibender Stärke an die beiden Leiterbahnen 103, 103' kapazitiv angekoppelt. Letztere dienen als Sende/Empfangsantenne für eine damit verbundene Sende/Empfangseinrichtung 104 der Prüfvorrichtung. Auf diese Weise wird von der Sende/Empfangseinrichtung 104 der Prüfvorrichtung das Eingangssignal für den Schaltkreischip 40 zuverlässig übertragen und das von dem Schaltkreischip 40 ausgesendete Ausgangssignal zuverlässig empfangen.

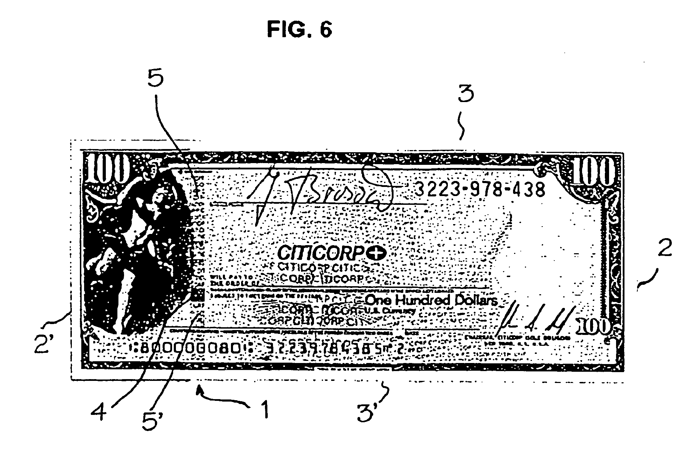

Die in Fig. 6 dargestellte Urkunde weicht von der in Fig. 1 und 2 dargestellten Urkunde lediglich hinsichtlich der lagemäßigen Anordnung des Schaltkreischips 4 ab. Im übrigen besteht völlige Übereinstimmung mit den Fig. 1 und 2, und es wird insoweit auf deren vorstehende Beschreibung verwiesen, wobei in Fig. 6 für die mit Fig. 1 übereinstimmenden Teile dieselben Bezugszeichen verwendet sind.

Fig. 6 verdeutlicht abweichend von Fig. 1 die in bezug auf die beiden Querränder 2, 2' und die beiden Längsränder 3, 3' unsymmetrische Lage des Schaltkreischips 4 auf der Urkunde. Auf diese Weise meidet oder Schaltkreischip 4 den Bereich der sich in der Mitte zwischen den beiden Längsrändern 3, 3' parallel dazu erstreckenden Längsmittellinie und auch den Bereich der sich in der Mitte zwischen den beiden Querrändern 2, 2' und parallel dazu erstreckenden Quermittellinie der Urkunde. Sofern die Urkunde, insbesondere der Geldschein, längs diesen beiden gedachten Mittellinien gefaltet wird, wird der Schaltkreischip 4 von dieser Faltung nicht berührt. Dies bedeutet, daß beim üblichen Falten keine Beschädigungsgefahr auftritt. Diese unsymmetrische Lageanordnung des Schaltkreischips 4 ist vorteilhaft, insbesondere auch für die Anordnung des Schaltkreischips 40 der in Fig. 3 und 4 dargestellten Urkunde.

Oftmals weisen Urkunden, insbesondere Geldscheine, einen Bereich auf, der nicht bedruckt wird. In diesem Bereich findet sich oftmals ein Wasserzeichen in der Papierschicht. Es ist von Vorteil, den Schaltkreischip 4 oder 40 in einem solchen unbedruckten Bereich anzuordnen, wodurch Belastungen des Schaltkreischips beim späteren Druckvorgang vermieden werden.

Ferner ist es von Vorteil, daß das als Sende/Empfangsantenne dienende Muster aus einem Material hergestellt wird, dessen Ausdehnungskoeffizient im wesentlichen dem Ausdehnungskoeffizienten der mit dem Muster verbundenen Papierschicht entspricht. Verziehungen oder Verwerfungen des Sicherheitspapiers oder gar Ablösungen des Musters können dadurch vermieden werden.

## Patentansprüche

1. Verfahren zur Prüfung der Echtheit von Urkunden, wobei der Urkundeninhalt in optisch lesbarer Form auf einem Sicherheitspapier aufgezeichnet ist, welches mit einer eine berührungsfreie Prüfung eines Echtheitsmerkmals ermöglichenden Struktur versehen ist, bei dem von einer die Urkunde prüfenden Stelle das Echtheitsmerkmal automatisch erfaßt wird, wobei die Struktur ein elektronischer Schaltkreis ist, der ansprechend auf ein empfangenes Eingangssignal ein das Echtheitsmerkmal darstellendes Ausgangssignal aussendet, und die die Urkunde prüfende Stelle an den Schaltkreis das die Aussendung seines Ausgangssignals auslösende Eingangssignal überträgt,
**dadurch gekennzeichnet, daß** auch der optisch lesbare Inhalt der Urkunde automatisch erfaßt wird und daß dieser mit dem erfaßten Echtheitsmerkmal in Beziehung gesetzt wird.

2. Verfahren nach Anspruch 1, **dadurch gekennzeichnet, daß** das von der prüfenden Stelle an den Schaltkreis übertragene Eingangssignal einen die prüfende Stelle identifizierenden Informationsinhalt aufweist, der in den Schaltkreis eingespeichert wird.

3. Verfahren nach Anspruch 2, **dadurch gekennzeichnet, daß** der eine prüfende Stelle identifizierende, eingespeicherte Informationseinheit ansprechend auf ein von einer prüfenden Stelle danach übertragenes Eingangssignal mit dem Ausgangssignal an die prüfende Stelle übertragbar ist.

4. Verfahren nach einem der Ansprüche 1 bis 3, **dadurch gekennzeichnet, daß** die zum Betrieb des Schaltkreises erforderliche Energie von der prüfenden Stelle mit dem Eingangssignal an den Schaltkreis übertragen wird.

## Claims

1. A method of testing the genuineness of documents, the content of the document being recorded in an optically legible form on a safety paper, which is provided with a structure enabling contact-free testing of a genuineness feature with which the genuineness feature is detected automatically by a body testing the document, the structure being an electronic circuit which, in response to a received input signal, emits an output signal representing the genuineness feature and the body testing the document transmits to the circuit the input signal triggering emission of its output signal,
**characterised in that** the optically legible content of the document is also automatically detected, and that the latter is related to the recorded genuineness feature detected.

2. The method according to Claim 1, **characterised in that** the input signal transmitted by the testing body to the circuit has an information content identifying the testing body which is stored in the circuit.

3. The method according to Claim 2, **characterised in that** the stored information unit identifying a testing body can be transmitted with the output signal to the testing body in response to an input signal transmitted according to the latter by a testing body.

4. The method according to any of Claims 1 to 3, **characterised in that** the energy required for operating the circuit is transmitted by the testing body with the input signal to the circuit.

## Revendications

1. Procédé de vérification de l'authenticité des actes, où le contenu de l'acte est enregistré sous une forme optiquement lisible sur un papier de sécurité, qui est muni d'une structure permettant une vérification sans contact d'une caractéristique d'authenticité, où par un service vérifiant l'acte, la caractéristique d'authenticité est détectée automatiquement, où la structure est un circuit électronique qui, en réponse à un signal d'entrée reçu, émet un signal de sortie représentant la caractéristique d'authenticité, et le service vérifiant l'acte transmet au circuit le signal d'entrée déclenchant l'émission de son signal de sortie,
**caractérisé en ce qu'**aussi le contenu optiquement lisible de l'acte est détecté automatiquement et **en ce que** celui-ci est mis en rapport avec la caractéristique d'authenticité détectée.

2. Procédé selon la revendication 1, **caractérisé en ce que** le signal d'entrée transmis par le service de vérification au circuit présente un contenu d'informations identifiant le service de vérification, qui est stocké dans le circuit.

3. Procédé selon la revendication 2, **caractérisé en ce que** le contenu d'informations stocké, identifiant un service de vérification, en réponse à un signal d'entrée transmis ensuite par un service de vérification, peut être transféré avec le signal de sortie au service de vérification.

4. Procédé selon l'une des revendications 1 à 3, **caractérisé en ce que** l'énergie requise pour le fonctionnement du circuit est transférée par le service de vérification avec le signal d'entrée au circuit.
